## Europäisches Patentamt

## European Patent Office

## Office européen des brevets

(19)

(11) Veröffentlichungsnummer: **0 236 322**
**B1**

(12) **EUROPÄISCHE PATENTSCHRIFT**

(45) Veröffentlichungstag der Patentschrift:
04.01.89

(51) Int. Cl.⁴: **B 60 K 41/08**

(21) Anmeldenummer: **85905614.5**

(22) Anmeldetag: **21.10.85**

(86) Internationale Anmeldenummer:
**PCT/EP 85/00555**

(87) Internationale Veröffentlichungsnummer:
**WO 86/02604 (09.05.86 Gazette 86/10)**

(54) **STEUEREINRICHTUNG FÜR EINE DRUCKMITTELBETÄTIGTE SCHALTKUPPLUNG.**

(30) Priorität: **27.10.84 PCT/EP84/00339**

(43) Veröffentlichungstag der Anmeldung:
**16.09.87 Patentblatt 87/38**

(45) Bekanntmachung des Hinweises auf die Patenterteilung:
**04.01.89 Patentblatt 89/1**

(84) Benannte Vertragsstaaten:
**DE**

(56) Entgegenhaltungen:
**FR-A-2 154 235**
**FR-A-2 172 622**
**US-A-3 876 028**

**Patents Abstracts of Japan, Vol. 7, No 141 (M-223),
21 June 1983
JP,A, 56150935 (Mitsubishi K.K.), 30 March 1983**

(73) Patentinhaber: **ZAHNRADFABRIK
FRIEDRICHSHAFEN AKTIENGESELLSCHAFT,
Löwentaler Strasse 100 Postfach 2520, D-7990
Friedrichshafen 1 (DE)**

(72) Erfinder: **HOLTERMANN, Otto, Rosenstrasse 35,
D-7994 Langenargen (DE)**
Erfinder: **TORBUSCH, Klaus, Felchenweg 6, D-7775
Ahausen (DE)**
Erfinder: **BIEBER, Gerold, Mühlengärten 7, D-7994
Langenargen (DE)**

(74) Vertreter: **Raue, Reimund, Zahnradfabrik
Friedrichshafen AG Löwentaler Strasse 100
Postfach 2520, D-7990 Friedrichshafen 1 (DE)**

**Beschreibung**

Die Erfindung betrifft eine Steuereinrichtung für eine druckmittelbetätigte Schaltkupplung nach dem Oberbegriff von Anspruch 1.

Solche Steuereinrichtungen sind in vielfältiger Weise bekannt und werden im Zusammenhang mit unterschiedlichsten Schaltkupplungen, z. B. Trocken- oder auch Naßkupplungen, und in Verbindung mit verschiedenen Getrieben zum Einsatz gebracht. Oft wird zwischen Antriebsmotor und Schaltkupplung noch ein mit einer Überbrückungskupplung ausgerüsteter Drehmomentwandler angeordnet, wie dies aus der DE-PS-3 305 999 bekannt ist. Mit solchen Einrichtungen sind auch von ungeübten Fahrern Gangschaltungen unter schwierigsten Bedingungen möglich und diese Schaltungen sind auch im Zugbetrieb qualitativ gut, während jedoch bei Schubrückschaltungen die Schaltqualität noch nicht befriedigen kann.

Aus der FR-A-2 172 622 entsprechend den Merkmalen des Oberbegriffs von Anspruch 1 ist weiterhin bekannt, nach einer Schaltung das Schließen der Kupplung über eine elektronische Einheit zu bewirken. Dazu werden die Drehzahlen 2 vor und nach der Kupplung erfaßt, in einer elektronischen Einheit verglichen und über eine Korrektureinrichtung, in Abhängigkeit der Gashebelverstellung zur Kupplungsbetätigung und zur Beeinflussung der Motordrehzahl, über die Füllung des Motors aufbereitet. Die sehr großen Drehzahldifferenzen bei einer Schubrückschaltung mit einem einfachen Gasstoß, vorrangig einen Vollgasstoß auszugleichen, sind dieser Schrift nicht zu entnehmen.

Es ist deshalb Aufgabe der Erfindung, eine Steuereinrichtung nach dem Oberbegriff von Anspruch 1 weiter zu entwickeln, mit der auch noch Schubrückschaltungen von hoher Qualität erzielt werden.

Diese Aufgabe wird mit den kennzeichnenden Merkmalen von Anspruch 1 erfüllt.

Infolge der Leerlaufstellung der Antriebsmaschine und dem Hochtouren der Getriebeausgangs- und nach erfolgter Rückschaltung auch der Getriebeeingangswelle bei Schubrückschaltungen ergeben sich relativ große Drehzahldifferenzen, die mit einer Beschleunigung des zwischen Kupplung und Antriebsmaschine angeordneten Antriebsstranges behoben werden, so daß allein bereits mit einem einfachen Gasstoß eine wesentliche Verbesserung der Schaltung eintritt.

Zur klaren Erkennung des Schubzustandes werden in einfacher Weise die Drehzahlen vor und nach der Schaltkupplung herangezogen, die, je nach dem Gesamtaufbau des Antriebsstranges, z. B. die Turbinendrehzahl eines zwischen Antriebsmotor und Schaltkupplung noch angeordneten Drehmomentwandlers und die Drehzahl der Eingangswelle des Vorgelegegetriebes sein kann. In einer elektronischen Einheit können diese Drehzahlen in einfacher weise verglichen werden und es kann solange ein Gasstoßbefehl ausgegeben werden, bis die Turbinendrehzahl die Eingangsdrehzahl des Getriebes plus eines Berichtigungsfaktor $\Delta n$ übersteigt.

Um den Gasstoß nicht während des gesamten Schubbetriebes auszulösen, ist es zweckmäßig, diesen allein auf die Schaltfolge von Neutral in einen neuen, z. B. tieferen Gang zu begrenzen, wobei diese Meldung an die elektronische Einheit ebenfalls elektrisch und damit in einfacher weise erfolgt. Die Betätigungseinrichtung für den Gasstoß an der Einspritzpumpe bzw. am Gasgestänge allgemein durch eine Überlagerung anzuordnen, ist besonders vorteilhaft, weil damit die Bedienung des Gasgestänges durch den Fahrer nicht beeinträchtigt wird und Bauteile, die an und für sich schon vorhanden sind, für die Gasstoßeinrichtung mitbenutzt werden.

Erfolgt die Übertragung der Gasregulierung vom Fahrer über ein Gaspedal und ein mechanisches Gasgestänge bis zu einem Stellhebel, z. B. der Einspritzpumpe, so ist diese Überlagerung der zusätzlichen und automatischen Betätigung dieses Stellhebels über eine Betätigungseinrichtung, die mit Druckmittel betrieben wird und eine Kolben-Zylindereinrichtung ist, von Vorteil. Wird der Stellhebel jedoch von einem sogenannten elektronischen Gaspedal aus betätigt, so kann der Gasstoßbefehl der elektronischen Einheit dieser Einrichtung überlagert werden.

Weitere Einzelheiten der Erfindung werden anhand von einem Ausführungsbeispiel und anhand von Zeichnungen erläutert, wobei die Einzelheiten der Zeichnung Gegenstand der Erfindung sind.

Es zeigen:

Fig. 1 eine mögliche Anordnung von Motor, Drehmomentwandler, Schaltkupplung und Getriebe in Verbindung mit der Gangschalteinrichtung und der Elektronik.

Fig. 2 einen Drehmomentwandler mit einer nachgeordneten Scháltkupplung in schematischer Darstellung.

Fig. 3 ein Flußschaubild in vereinfachter Darstellung.

Fig. 4 das Schema einer Motorsteuerung mit einer Betätigungseinrichtung für eine Einspritzpumpe.

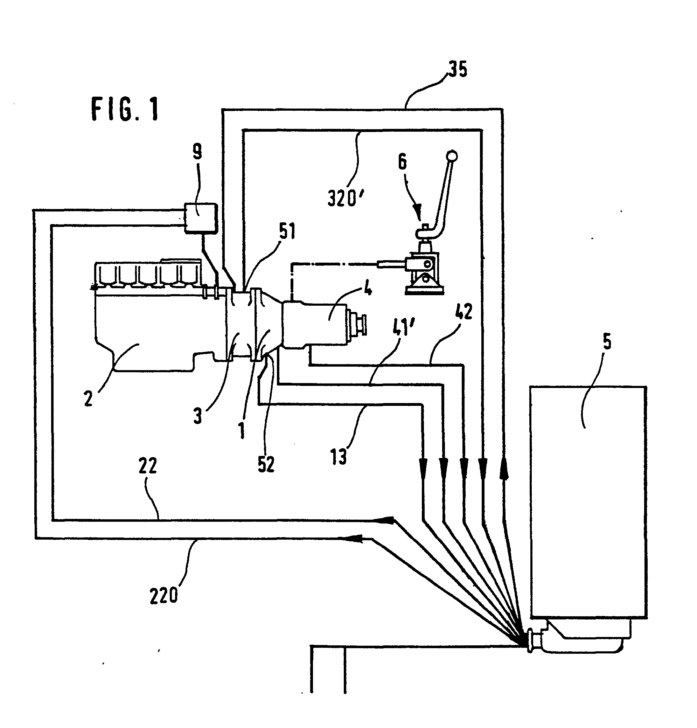

In Fig. 1 ist mit 2 ein Motor, mit 3 und 1 eine Wandler- und eine Schaltkupplung und mit 4 ein Vorgelegegetriebe bezeichnet und schematisch dargestellt. Einer elektrischen Einheit 5, vorrangig einer AFM-6-Einheit, werden die Drehzahlen einer Turbine über eine Leitung 320' und eine Getriebeeingangsdrehzahl über eine Leitung 41' zugeleitet. Über eine Leitung 42 wird Neutralstellung des Getriebes gemeldet und über eine Leitung 13 erfolgt die Meldung, daß von Neutral in einen Gang geschaltet wird.

Der Gasstoß wird von der elektronischen Einheit 5, je nach Schaltlogik, über Leitungen 22, 220 an eine Motorsteuerung 9 für eine Einspritzpumpe 7 gegeben und die Steuerung der Wandlerkupplung - Öffnen/Schließen - erfolgt über eine Leitung 35.

Das Vorgelegegetreibe 4 wird vom Fahrer über eine Gangschalteinrichtung 6 mechanisch geschaltet.

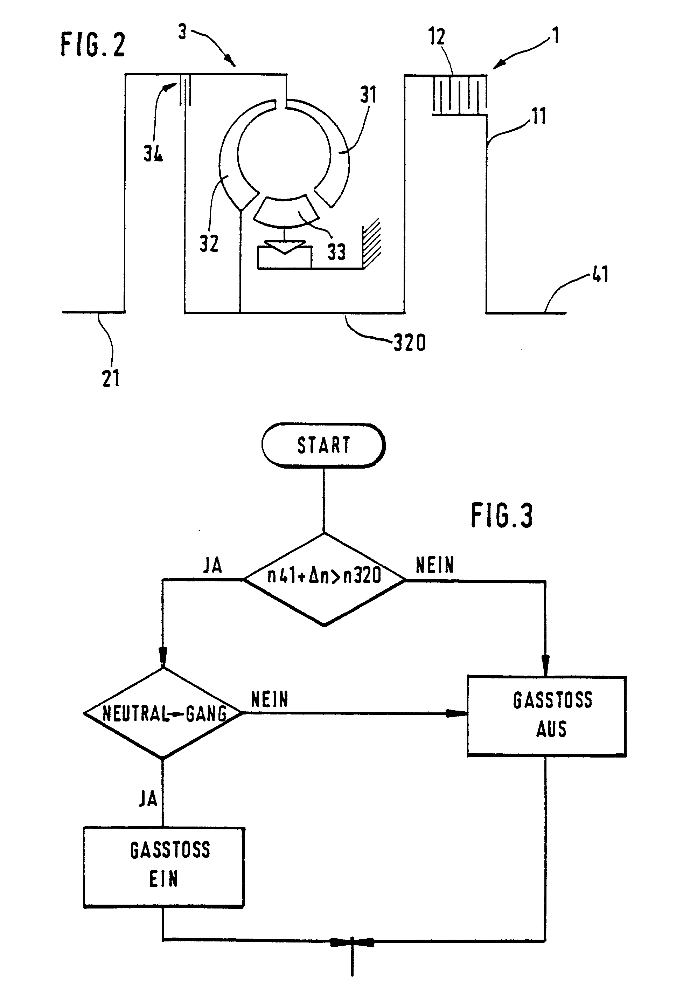

Fig. 2 zeigt schematisch den Aufbau der sogannanten Wandlerschaltkupplung, die aus der Schaltkupplung 1 und aus dem Drehmomentwandler 3 zusammengesetzt ist, wobei 21 eine Motorabtriebswelle und 320 eine Turbinenwelle ist. Mit 31 ist eine Pumpe, 32 eine Turbine und 33 ein Reaktionsglied des Drehmomentwandlers bezeichnet, 34 ist eine Überbrückungskupplung zwischen der Motorabtriebswelle 21 und der Turbinenwelle 320, 11 und 12 sind zwei Kuppelelemente der Schaltkupplung 1 und 41 eine Getriebeeingangswelle.

Die Funktion, nach der der Gasstoßbefehl an die Einspritzpumpe bzw. Drosselklappe des Antriebsmotors erteilt wird, ist in einfacher Weise aus Fig. 3 ableitbar. Nach der Ermittlung der Schubbedingung aus den Drehzahlen von Getriebeeingangswelle 41 und der Turbinenwelle 320 erfolgt eine Abfrage, ob der Schalthebel von der Neutralstellung in Richtung auf einen Gang zu bewegt wird, so daß der Gasstoß wirklich nur in dieser Phase der Schaltung erfolgt. Weiter ist es zweckmäßig, die Getriebeeingangsdrehzahl mit der Turbinendrehzahl geringfügig zu überholen. Um dies zu erreichen, wird in der elektronischen Einheit 5 ein Berichtigungsfaktor $\Delta n$, der in Abhängigkeit von der Anlage ermittelt wird, gespeichert und jeweils beim Vergleich der Drehzahlen einbezogen.

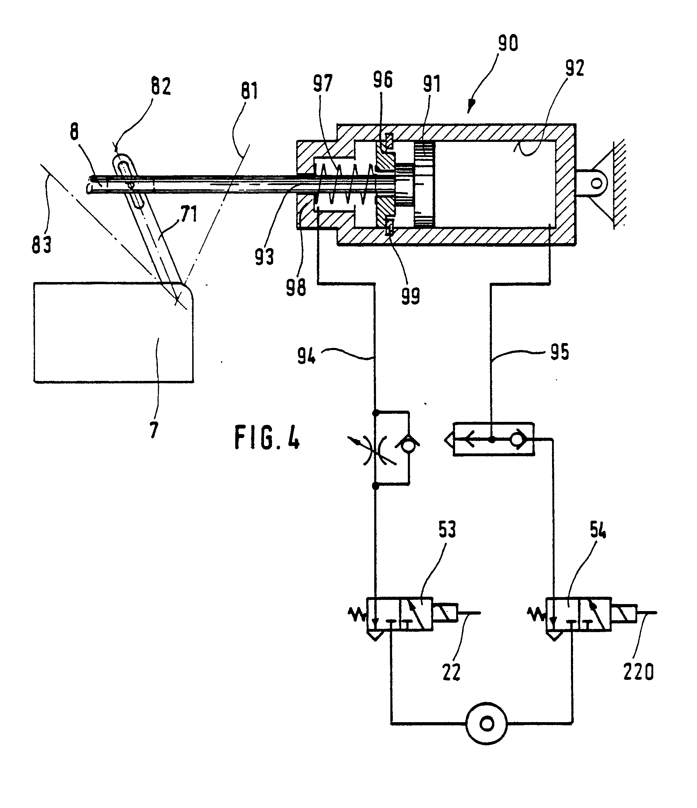

Fig. 4 zeigt eine Möglichkeit, wie der Gasstoßbefehl von der elektronischen Einheit 5 auf z. B. die Einspritzpumpe 7 über Magnetventile 53, 54 und Betätigungseinrichtung 90 auf ein Gasgestänge 8 geleitet wird. Zur Steuerung der beiden Magnetventile 53, 54 gelten dabei folgende logische Verknüpfungen:

| Logik: | MV 53 | MV 54 |
|---|---|---|
| Nur Gaspedal | 0 | 0 |
| Vollgas | 1 | 0 |
| Leerlauf | 1 | 1 |
| Motor abstellen (Schubabschaltung Motorbremse) | 0 | 1 |

Die Betätigungseinrichtung 90 besteht aus einem Zylinder 92, in dem ein Kolben 91 angeordnet ist. Dieser ist über eine Kolbenstange 93 mit dem Gasgestänge 8 verbunden, so daß die Einspritzpumpe 7 über einen Betätigungshebel 71 individuell vom Fahrer aus beaufschlagt werden kann und zusätzlich von der Betätigungseinrichtung 90 aus im Leerlaufstellung 82, Vollgasstellung 81 oder Stellung Motorabstellen gebracht werden kann. Die Wirkungsweise der Betätigungseinrichtung ist in einfacher Weise aus der vorgenannten Tabelle ableitbar. Die Mittelstellung des Kolbens 91 - Leerlaufstellung 82 - wird durch einen zweiten Kolben 96, der von einer Feder 97 gegen einen Anschlag 99 am Zylinder 92 gedrückt wird, sichergestellt. Bei laufendem Motor bewegt die Betätigungseinrichtung, also in der dargestellten Weise, das Gasgestänge entweder in die Leerlaufstellung 82 - kein Gasstoß - oder in die Vollgasstellung 81 - Gasstoß -.

Anstelle der über Druckmittel betriebenen Betätigungseinrichtung für den Betätigungshebel 71 (der z. B. Einspritzpumpe 7) ist es möglich, auch einen elektrisch betätigten Aktuator - von der Elektronik aus gesteuerter Stellmotor - einzusetzen. Solche Aktuatoren werden in Verbindung mit Gaspedaleinrichtungen betrieben, deren Stellung elektronisch-elektrisch übertragen werden.

## Patentansprüche

1. Steuereinrichtung für eine druckmittelbetätigte Schaltkupplung in oder an einem mit Synchroneinrichtungen ausgebildeten Vorgelegegetriebe, wobei die Schaltkupplung von einer Gangschalteinrichtung (6) betätigt wird und die Drehzahlanpassung von nach einer Gangschaltung zu verbindenden Kupplungselementen (11, 12) mit Hilfe einer Antriebsmaschine (2) erfolgt, wobei die Drehzahlen elektronisch gemessen und in einer elektronischen Einheit (5) erfaßt und bearbeitet werden, dadurch gekennzeichnet, daß bei Schubrückschaltungen über einen Gasstoß, der die Erhöhung der Drehzahl des der Antriebsmaschine (2) zugeordneten Teilantriebsstranges (21, 31, 32, 320, 12) bewirkt, die Drehzahlanpassung erzielt wird und daß die Schubbedingung nach der Formel n41 + $\Delta n$ größer n320 ermittelt und so lange aufrechterhalten wird, bis n41 + $\Delta n$ = n320 erreicht ist.

2. Steuereinrichtung nach Anspruch 1, dadurch gekennzeichnet, daß zwischen Antriebsmaschine (2) und Schaltkupplung (1) und zwischen dieser und dem Vorgelegegetriebe (4) Einrichtungen (51, 52) zur Drehzahlerfassung angeordnet sind, über deren Drehzahldifferenz der Fahrzustand - Zug/Schub - ermittelt wird.

3. Steuereinrichtung nach Anspruch 2, dadurch gekennzeichnet, daß der Gasstoßbefehl nur erfolgt, wenn die Gangschalteinrichtung (6) von Neutralstellung in Richtung auf einen Gang zu bewegt wird.

4. Steuereinrichtung nach Anspruch 3, dadurch gekennzeichnet, daß der Gasstoßbefehl in eine elektronische Gaspedaleinrichtung eingreift und dort Vollgasstellung auslöst, bis n41 + $\Delta n$ = n320 erreicht ist.

5. Steuereinrichtung nach Anspruch 3, dadurch gekennzeichnet, daß einem Gasgestänge (8) vom Gaspedal (nicht dargestellt) zur Einspritzpumpe (7) eine Betätigungseinrichtung (90) überlagert ist, deren Kolben (91) von der elektronischen Einheit (5) über zwei Magnetventile (53, 54) gesteuert wird und das Gestänge (8) entweder in die Vollgasstellung (81) oder Leerlaufstellung (82) betätigt.

6. Steuereinrichtung nach Anspruch 5, dadurch gekennzeichnet, daß die Betätigungseinrichtung (90) neben Leerlaufstellung (82) und Vollgasstellung (81) noch eine Stellung - Motorabstellen (83) - aufweist, die beim Abstellen des Fahrzeuges oder bei Schubabschaltung die Kraftstoffzufuhr ganz verschließt.

7. Steuereinrichtung nach Anspruch 6, dadurch <u>gekennzeichnet</u>, daß die Betätigungseinrichtung (90) für die Einspritzpumpe (7) einen Zylinder (92) umfaßt, in dem der mit dem Gasgestänge (8) und einem Betätigungshebel (71) der Einspritzpumpe (7) über eine Kolbenstange (93) verbundene Kolben (91) angeordnet ist, der über zwei Magnetventile (53, 54) und Druckmittelleitungen (94, 95) in drei Grundstellungen (Vollgas - Leerlauf - Motorabstellen) erstellt wird und daß ein weiterer Kolben (96) angeordnet ist, der von einer am Zylinderboden (98) sich abstützenden Feder (97) auf einen Anschlag (99) zu bewegt wird und der den ersten Kolben (91) in die Leerlaufstellung (82) bewegt, wenn beide Magneventile (53, 54) entlüftet sind, so daß die Verstellung des Betätigungshebels (71) der Einspritzpumpe (7) ausschließlich durch den Fahrer über das Gaspedal (Gasgestänge 8) erfolgt.

8. Steuereinrichtung nach Anspruch 2 und mit einem mit einer Überbrückungskupplung (34) ausgestatteten Drehmomentwandler (3) zwischen der Antriebsmaschine (2) und der Schaltkupplung (1), dadurch <u>gekennzeichnet</u>, daß die Einrichtungen (51, 52) zur Drehzahlerfassung an einer Turbinenwelle (320) und am Kupplungsabtrieb (Getriebeeingangswelle 41) angeordnet und mit der elektronischen Einheit (5) verbunden sind, in der die Schubbedingung ermittelt und der Befehl für einen Gasstoß zur Erhöhung der Drehzahl der Turbinenwelle (320) ausgegeben wird.

## Claims

1. Control device for a pressure-actuated coupling clutch in or on a countershaft transmission fitted with a synchronizer device, where the selector clutch is actuated by a gear selector device (6) and the speed of clutch elements (11, 12), which are connected together whenever a gear is selected, is adjusted with the aid of an input machine (2), whereby the speeds are measured electronically and stored and processed in an electronic unit (5), the whole being <u>characterized in that</u> when down-shifts on the overrun occur as a result of the throttle having been opened momentarily, which increases the speed of the parts of the drive line (21, 31, 32, 320, 12) subordinated to the input machine (2), this has the effect of matching the speed, and that the overrun condition is calculated according to the formula $n41 + \Delta n > n320$, which is maintained until $n41 + \Delta n \, n320$.

2. Control device according to Claim 1, <u>characterized in that</u> devices (51, 52) to record the speed are arranged between the input machine (2) and the selector clutch (1) and between the latter and the countershaft transmission (4), thereby allowing the difference in speed in the traction/overrun condition to be calculated.

3. Control device according to Claim 2, <u>characterized in that</u> the momentary throttle opening command only takes place when the gear selector device (6) is moved from neutral towards a gear.

4. Control device according to Claim 3, <u>characterized in that</u> the momentary throttle opening command influences an electronic throttle pedal device where it selects the full throttle position until $n41 + \Delta n = n320$ has been reached.

5. Control device according to Claim 3, <u>characterized in that</u> a throttle linkage (8) from the throttle pedal (not illustrated) to the injection pump (7) is overridden by an actuating device (90), the piston (91) of which is controlled by the electronic unit (5) by way of two solenoid valves (53, 54) and moves the linkage (8) either towards the full throttle position (81) or the idling position (82).

6. Control device according to Claim 5, <u>characterized in that</u>, in addition to the idling position (82) and the full throttle position (81), the actuating device (90) has a further position - the engine switch-off position (83) - which entirely cuts off the supply of fuel when the vehicle is switched off or is on the overrun.

7. Control device according to Claim 6, <u>characterized in that</u> the actuating device (90) for the injection pump (7) comprises a cylinder (92), located in which is the piston (91), which is connected to the throttle linkage (8) and an actuating lever (71) of the injection pump (7) by a piston rod (93), and can be set to three basic positions (full throttle - idling - engine switch-off) by means of two solenoid valves (53, 54) and pressure medium pipes (94, 95), and that a further piston (96) is provided, which is moved towards a stop (99) by a spring (97) supported against the cylinder base (98) and which moves the the first piston (91) to the idling position (82) whenever both the solenoid valves (53, 54) are exhausted, so that the actuating lever (71) of the injection pump (7) is repositioned exclusively by the driver by way of the throttle pedal (throttle linkage 8).

8. Control device according to Claim 2 and having a torque converter (3) equipped with a lock-up clutch (34) located between the input machine (2) and the selector clutch (1), <u>characterized in that</u> the devices (51, 52) for recording the speed are arranged on a turbine shaft (320) and at the clutch output (transmission input shaft 41) and are connected to the electronic unit (5) in which the overrun condition is determined and the command for momentary throttle opening to increase the speed of the turbine shaft (320) is generated.

## Revendications

1. Dispositif de commande pour embrayage à pression dans ou sur une boîte à renvoi avec dispositifs de synchronisation, dont l'embrayage est actionné par un dispositif de passage des vitesses (6) et la synchronisation du régime est réalisée par des composants de l'embrayage (11, 12) devant être reliés au passage des vitesses au moyen d'une machine motrice (2) le régime étant mesuré électroniquement, enregistré et exploité dans un organe électronique (5), <u>caractérisé</u> en ce que, lors de rétrogradations des vitesses en retenue la synchronisation du régime se fait, sous l'effet d'impulsions de carburant, ayant pour conséquence l'augmentation du régime d'une partie de la transmission (21, 31, 32, 320, 12) affectée à la machine motrice (2),et que la retenue est déterminée selon la formule n41 + Δn supérieur à n320 et est maintenue jusqu'à obtention de n41 + Δn 320.

2. Dispositif de commande selon revendication 1, <u>caractérisé</u> en ce que des dispositifs (51, 52) d'enregistrement du régime sont disposés entre la machine motrice (2) et l'embrayage (1) et entre ce dernier et la boîte à renvoi (4), par l'intermédiaire desquels la différence de régime définit les conditions de marche en traction/retenue.

3. Dispositif de commande selon revendication 2, <u>caractérisé</u> en ce que la commande de l'impulsion de carburant n'a lieu que si le dispositif de passage des vitesses (6) est actionné du point-mort vers une vitesse.

4. Dispositif de commande selon revendication 3, <u>caractérisé</u> en ce que la commande de l'impulsion de carburant engrène dans un dispositif électronique de pédale d'accélération et déclenche la position (pleins gaz, jusqu'à avoir atteint n41 + Δn = n320.

5. Dispositif de commande selon revendication 3, <u>caractérisé</u> en ce que un dispositif de manoeuvre (90) est superposé à la tringlerie d'accélération (8), reliant la pédale d'accélération (non représentée) à la pompe d'injection (7), dont le piston (91) est commandé par deux électrovannes (53, 54) de l'organe électronique (5), et la tringlerie (8) est actionnée soit en position pleins gaz (81), soit en position neutre (82).

6. Dispositif de commande selon revendication 5, <u>caractérisé</u> en ce que le dispositif de manoeuvre (90) dispose, outre de la position neutre (82) et de la position de pleins gaz (81), d'une position de coupure du moteur (83) qui ferme totalement l'arrivée de carburant lors de la coupure de l'allumage du véhicule ou de l'interruption de la retenue.

7. Dispositif de commande selon revendication 6, <u>caractérisé</u> en ce que le dispositif de manoeuvre (90) pour la pompe d'injection (7) comprend un vérin (92) dans lequel est disposé le piston (91), relié à la tringlerie d'accélération (8) et à un levier de commande (71) de la pompe d'injection (7), qui est actionné dans trois positions de base (pleins gaz - position neutre- position coupure moteur) au moyen de deux électrovannes (53, 54) et de conduites haute pression (94, 95),et qu'un autre piston (96) actionné vers une butée (99) par un ressort (97) appuyant sur le fond du cylindre (98), est prévu, plaçant le premier piston (91) en position neutre (82) lorsque les deux électrovannes (53, 54) sont purgées, en sorte que le déplacement du levier de commande (71) de la pompe d'injection (7) est exclusivement déclenché par le conducteur, par l'intermédiaire de la pédale d'accélération (tringlerie d'accélération 8).

8. Dispositif de commande selon revendication 2, avec convertisseur de couple (3) assorti d'un embrayage de pontage (34) entre la machine motrice (2) et l'embrayage (1), <u>caractérisé</u> en ce que les dispositifs (51, 52) servant à l'enregistrement du régime sont disposés sur l'arbre de turbine (320) et la sortie de l'embrayage (arbre d'entrée de la boîte de vitesses 41) et sont reliés à l'organe électronique (5) dans lequel la retenue est déterminée et l'ordre d'impulsion de l'arrivée de carburant est émis afin d'augmenter le régime de l'arbre de turbine (320).

FIG. 1

FIG. 2

START

FIG.3

$n41 + \Delta n > n320$

JA        NEIN

NEUTRAL-GANG        NEIN

JA

GASSTOSS
AUS

GASSTOSS
EIN

3

FIG. 4